# FASCICULE DE BREVET EUROPEEN

(11) **EP 1 125 487 B1**
(45) Date de publication et mention de la délivrance du brevet: **25.08.2004**
(21) Numéro de dépôt: 00430008.3
(22) Date de dépôt: 18.02.2000
(51) Int. Cl.: A01B 39/26, A01B 39/16

(54) **Machine polyvalente de culture interpieds pour plantations d'arbres ou arbustes telles que vignes ou vergers**
Mehrzweckmaschine zum Zwischenkultivieren für Baum- oder Strauchpflanzungen bzw. Wein- oder Obstgärten
Multipurpose machine for intercultivation of tree or bush plantations such as vineyards or orchards

(43) Date de publication de la demande: 22.08.2001
(73) Titulaire: PELLENC (Société Anonyme), 84120 Pertuis (FR)
(72) Inventeur: Pellenc, Roger, 84120 Pertuis (FR); Delran, Robert, 84120 Pertuis (FR)
(74) Mandataire: Marek, Pierre

(56) Documents cités:
- DE-A- 3 507 475
- FR-A- 1 469 298
- FR-A- 2 109 237
- FR-A- 2 770 740
- FR-E- 86 321
- US-A- 2 206 283

## Description

La présente invention concerne une machine polyvalente de culture interpieds pour plantations d'arbres ou arbustes, généralement plantés en ligne, telles que vignes ou vergers, une telle machine pouvant par exemple être utilisée pour des travaux de sarclage ou de fauchage, moyennant le montage, sur le rotor de sa tête de travail, d'outils adaptés à la nature du travail à effectuer.

On connaît des machines à sarcler ou décavaillonneuses destinées à travailler la terre, entre les pieds des arbres ou arbustes d'une plantation en ligne, dans le but d'éliminer les végétaux inutiles poussant entre lesdits pieds, tout en ameublissant la croûte du sol.

L'invention concerne les machines du genre comportant une tête de travail montée tournante autour d'un axe orienté perpendiculairement ou sensiblement perpendiculairement au sol, en cours de travail.

Les machines connues de ce type (US-4.332.299A, FR-1.577.988A, FR-2.683.117A, FR-1.469.298A) comprennent une tête de travail comportant un porte-outils rotatif horizontal mû par un moteur hydraulique ou par la prise de force d'un tracteur agricole et sur la face inférieure duquel sont rigidement fixées des dents ou lames s'étendant vers le bas. Afin d'éviter que l'ensemble tournant constitué par le plateau rotatif et les dents de sarclage ne puisse venir au contact des pieds des plantes, arbres ou arbustes, ce qui provoquerait une lacération ou déchiquetage desdits pieds, un palpeur est monté à l'avant et à distance de la tête de sarclage, de sorte que lorsque ce palpeur rencontre un pied d'arbre ou arbuste, il se trouve repoussé et commande un dispositif hydraulique qui assure l'escamotage latéral de ladite tête de sarclage à l'approche dudit pied. Après dépassement de celui-ci, le palpeur revient à sa position initiale et commande le dispositif hydraulique qui replace la tête de sarclage dans l'interceps ou dans l'interpieds.

Dans le document FR-86321 est décrite une décavaillonneuse rotative comportant des outils entraînés en rotation par un arbre vertical et au-dessous desquels est installé un disque denté monté tournant sur l'extrémité inférieure dudit arbre. A l'avant des outils est placé un tateur qui actionne le distributeur d'un vérin assurant le déplacement en retrait desdits outils hors de la ligne de plantation, lors de la rencontre d'un pied de vigne. En cas de non fonctionnement du tateur, le disque denté qui présente un rayon supérieur au rayon d'action des outils agit comme un élément de sécurité permettant l'effacement desdits outils lors de la rencontre d'un pied de vigne.

Ces machines qui permettent une mécanisation des travaux aratoires effectués entre les ceps de vigne ou entre les pieds des arbres ou arbustes des plantations, présentent cependant plusieurs inconvénients notables.

Elles n'ont aucun caractère polyvalent.

Compte tenu du fait que leur tête de sarclage s'efface à l'approche desdits pieds et se repositionne après dépassement de ces derniers, la durée de ce mouvement et le déplacement de la machine, laissent subsister des zones non travaillées plus ou moins importantes à proximité des pieds des arbustes ou arbres.

Leur palpeur peut se trouver actionné lors de la rencontre de végétaux indésirables résistant à la flexion, ce qui provoque l'escamotage de la tête de sarclage et la création de zones non désherbées.

L'utilisation d'un palpeur et d'un dispositif hydraulique de commande d'effacement de leur tête de sarclage complique leur fabrication et leur entretien et influe défavorablement sur leur prix de revient.

Dans le document FR-2.109.237 A est décrite une machine de tonte et de binage comportant une tête de travail du genre susmentionné, au-dessus de laquelle est disposé un disque plat libre en rotation et présentant un diamètre légèrement supérieur au diamètre de la surface de travail des outils, de sorte que lors de la rencontre d'un cep, le disque plat est censé rouler sur le cep, de manière à permettre une action de tonte ou de binage très près de celui-ci et sans le blesser. Toutefois, la rencontre de ce disque et des pieds d'arbustes génère des chocs ayant un effet nuisible sur la plante ; par exemple, à certaines périodes de l'année, la vigne est très sensible aux vibrations et aux chocs entraînant la chûte d'un fort pourcentage de bourgeons.

Un premier objet de l'invention est de remédier aux inconvénients susmentionnés des machines de culture du sol du genre précité.

Selon une première disposition caractéristique cet objectif est atteint grâce à une machine de culture du sol comme revendiquée.

Grâce aux dispositions caractéristiques ci-dessus, la machine polyvalente de culture interpieds selon l'invention ne comporte aucun dispositif d'effacement latéral commandé par un palpeur pour éloigner sa tête de travail à l'approche des pieds de vigne ou autres arbres ou arbustes, ou lors de la rencontre des végétaux indésirables résistant à la flexion.

En effet, la tête de travail peut venir au contact des pieds des arbustes autour desquels elle peut effectuer un demi-cercle par suite de son engrènement avec ces derniers. On comprend que les outils peuvent ainsi tourner autour des pieds des arbres ou arbustes, très près de ceux-ci mais sans les toucher, et, par conséquent, sans risque de les blesser ou de les couper.

La machine selon l'invention ne laisse donc aucune zone non travaillée autour des ceps ou pieds des plants.

Outre l'inconvénient déjà souligné d'un déplacement à vitesse lente, la machine décrite dans le document FR-2.109.237A et les machines décrites dans les différents documents susmentionnés ont pour désavantage supplémentaire le fait que leur tête de culture ne peut travailler que lentement, si l'on considère que la rotation à grande vitesse de ladite tête de culture entraînerait des projections dangereuses de pierres.

Suivant une autre importante disposition caractéristique de l'invention, ce problème est solutionné grâce au fait que le guide engrenant présente dans sa partie centrale la forme générale d'une cloche.

Grâce à cette conformation, on réduit considérablement les projections de poussières ou de pierres, de sorte que la tête de travail peut tourner à des vitesses relativement élevées, sans risque pour le conducteur de la machine ou pour les personnes se trouvant à proximité.

En outre, cette conformation permet de limiter la profondeur de travail des outils. D'autre part, le volume intérieur libre de la cloche, permet d'éviter la compression de la couche de terre ameublie par les outils de sarclage.

Un autre avantage résultant de la réalisation du guide engrenant sous forme de cloche est qu'elle confère un caractère polyvalent à la tête de travail qui peut être utilisée soit pour des travaux de sarclage ou analogues lorsque les exploitants sont partisans du désherbage, soit comme faucheuse lorsque ces derniers préfèrent cultiver leurs vignobles ou vergers en herbe.

Selon une autre disposition caractéristique, le guide engrenant est accouplé à une motorisation permettant son entraînement en rotation à une vitesse approximativement égale à la vitesse d'avancement de la machine, en cours de travail.

Grâce à cette disposition caractéristique, la machine polyvalente de culture interpieds selon l'invention peut effectuer un travail régulier et sans à-coups ; en effet, le guide engrenant "s'enroule" plus facilement autour des pieds ou ceps qui se trouvent peu exposés à des chocs ou à des frottements susceptibles de les ébranler, ou de les mutiler. Il est ainsi possible d'augmenter la vitesse d'avancement de la machine lorsqu'elle travaille, par rapport aux matériels comparables.

Selon une autre disposition caractéristique, les extrémités des parties saillantes périphériques du guide engrenant, sont relevées par rapport à la base de sa partie centrale en forme de cloche.

Grâce à cette disposition, le guide engrenant en forme de cloche peut glisser aisément sur le sol, sans le racler, les extrémités relevées en forme de ski permettant de gravir aisément les dévers et de suivre les inégalités de terrain.

Un autre inconvénient des machines à sarcler décrites dans les documents susmentionnés découle du fait que leur tête de sarclage est directement portée par l'extrémité distale d'un bras se fixant, par l'intermédiaire de son extrémité opposée sur un véhicule tel qu'un tracteur agricole. Ce montage a pour effets désavantageux de ne pas permettre le meilleur positionnement de la tête de sarclage, en cours de travail, par rapport à la configuration du terrain, et une certaine propension de ladite tête de sarclage au sautillement, laquelle progresse alors par rebonds successifs, notamment dans les zones caillouteuses en laissant des surfaces non désherbées. En outre, lors de son déplacement, la tête de sarclage rencontre des herbes et végétaux naturellement orientés verticalement, de sorte que ces derniers ont tendance à s'entortiller autour des outils.

On remédie à ces inconvénients selon une autre très importante disposition caractéristique de l'invention par un agencement suivant lequel la tête de travail de la machine est attelée à un patin pesant apte à glisser sur le sol, au moyen d'un dispositif d'accouplement autorisant des mouvements de pivotement de ladite tête de travail, autour de deux axes orthogonaux.

Grâce à cette disposition, la tête de travail se trouve correctement positionnée par rapport au sol, le patin constituant une sorte d'interface tracteur/outils, permettant de placer la tête de travail dans une position idéale par rapport à la configuration du terrain. D'autre part, le passage préalable du patin pesant qui précède la tête de travail a pour effet de coucher les herbes et autres végétaux, et de repousser les pierres et branches cassées, ce qui prépare le terrain pour la tête de travail et facilite l'action des outils de celle-ci.

Cet avantage se trouve amélioré grâce à une autre disposition caractéristique de l'invention, suivant laquelle le patin tracteur est fixé à l'extrémité distale d'un bras avec une liberté de mouvements autour d'au moins deux axes perpendiculaires, par rapport à ladite extrémité.

Avec cette disposition, le patin pesant épouse étroitement les inégalités du terrain et reste en permanence dans la position imposée par le sol, de sorte que la tête de travail attelée audit patin pesant, se trouve toujours placée dans la bonne position par rapport au terrain, durant tout son trajet.

Les buts, caractéristiques et avantages ci-dessus, et d'autres encore, ressortiront mieux de la description qui suit et des dessins annexés dans lesquels :

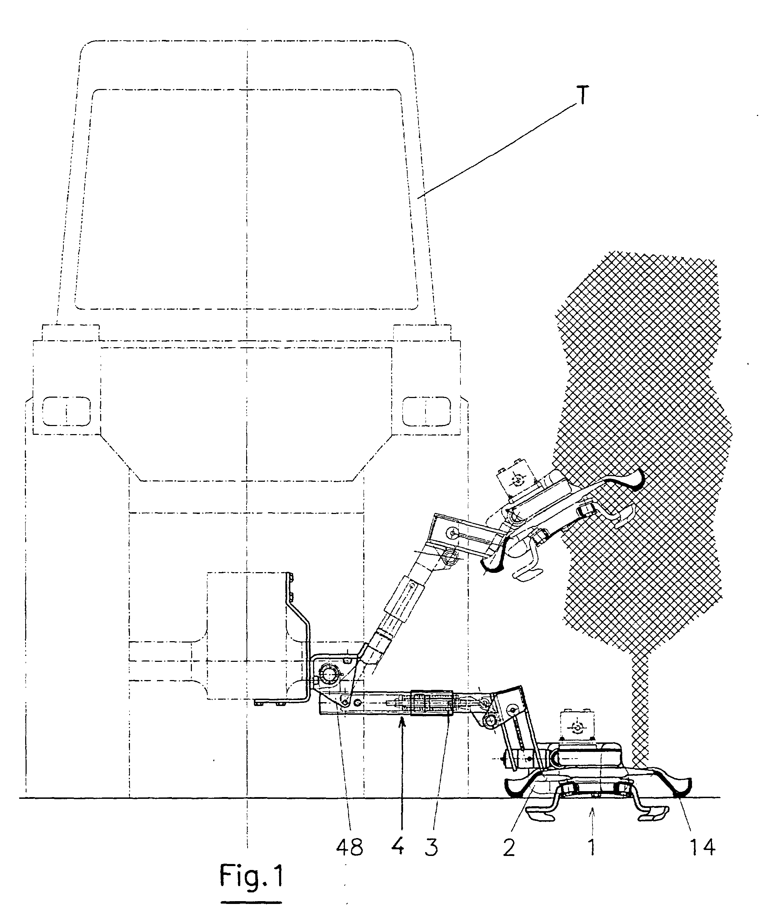

La figure 1 est une vue de face illustrant un exemple de réalisation de la machine de culture du sol selon l'invention, utilisée comme une machine à sarcler, montrée montée sur un tracteur sommairement représenté, le tracé en traits forts illustrant la position de cette machine en cours de travail, tandis que le tracé en traits fins montre la position relevée de l'équipage de sarclage.
La figure 2 est une vue en plan et à plus grande échelle de l'équipage de sarclage traîné de cette machine.

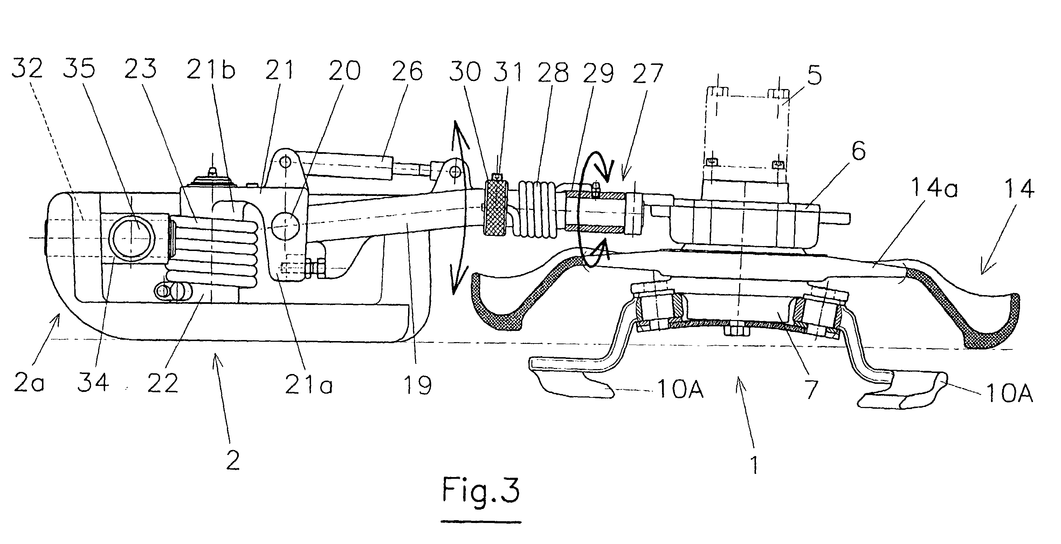

La figure 3 est une vue en coupe suivant la ligne 3-3 de la figure 2.
La figure 4 est une vue en coupe axiale et à plus grande échelle de la tête de sarclage.
La figure 5 est une vue en coupe analogue à la figure 4 et montrant l'utilisation de la tête de travail comme tête de faucheuse ou tondeuse.
La figure 6 est une vue de face et la figure 7 est une vue arrière, avec coupe partielle, illustrant deux positions de travail en dévers de l'équipage de sarclage, ces figures montrant également le montage flottant du bâti d'attelage.

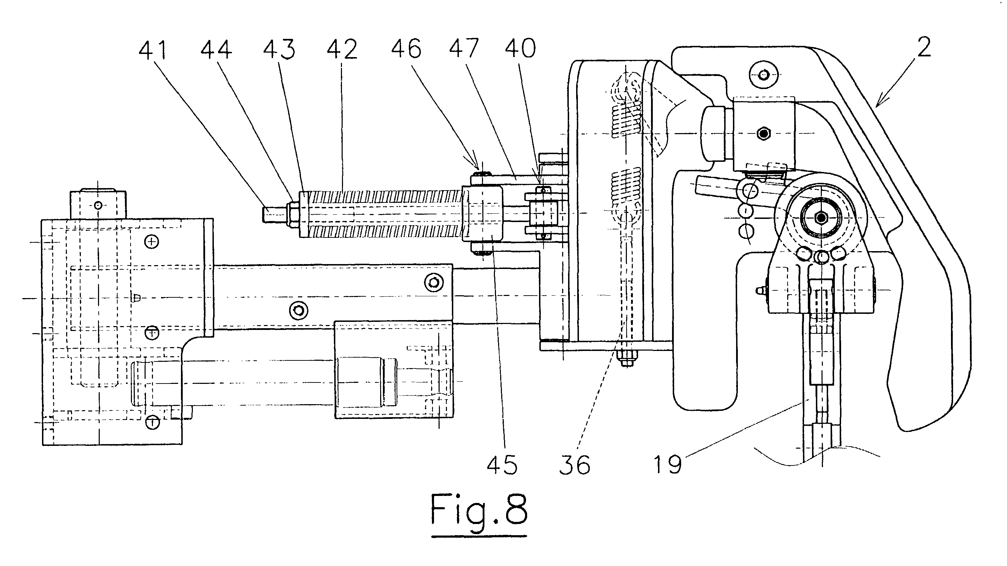

La figure 8 est une vue en plan du bâti d'attelage de la machine.

Les figures 9 et 10 sont des vues en élévation illustrant l'effacement du patin pesant, lors de la rencontre d'un obstacle dur.

Les figures 11, 12 et 13, sont des vues en plan de l'équipage traîné de la machine, illustrant trois phases successives du contournement "au plus près" d'un obstacle vertical tel que cep de vigne, piquet de palissage, tronc d'arbre.

On se reporte auxdits dessins pour décrire un exemple intéressant quoique nullement limitatif, de réalisation de la machine à sarcler selon l'invention.

Suivant l'exemple illustré, la machine comprend un bâti d'attelage permettant sa fixation sur l'un des côtés du châssis d'un tracteur agricole, mais on précise que ce bâti pourrait être conformé pour permettre son installation sur tout autre emplacement du châssis ou d'un véhicule d'un autre genre spécialement destiné aux travaux de sarclage ou non. Il est aussi possible de monter deux machines selon l'invention sur un même tracteur agricole, une de chaque côté de celui-ci, ce qui signifie que suivant l'emplacement de son montage, la machine peut être adaptée pour travailler à droite ou à gauche du tracteur ou autre véhicule porteur.

Selon l'exemple très avantageux représenté, la machine comprend une tête de travail 1, attelée à un patin pesant 2 lui-même fixé à un bras relevable 3 du bâti d'attelage 4.

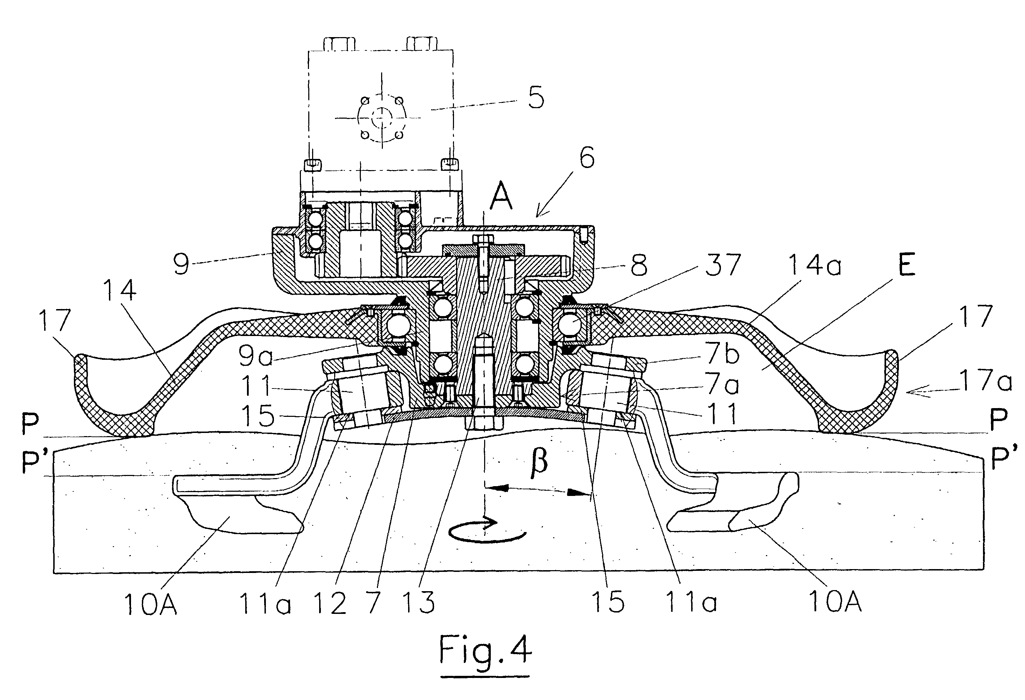

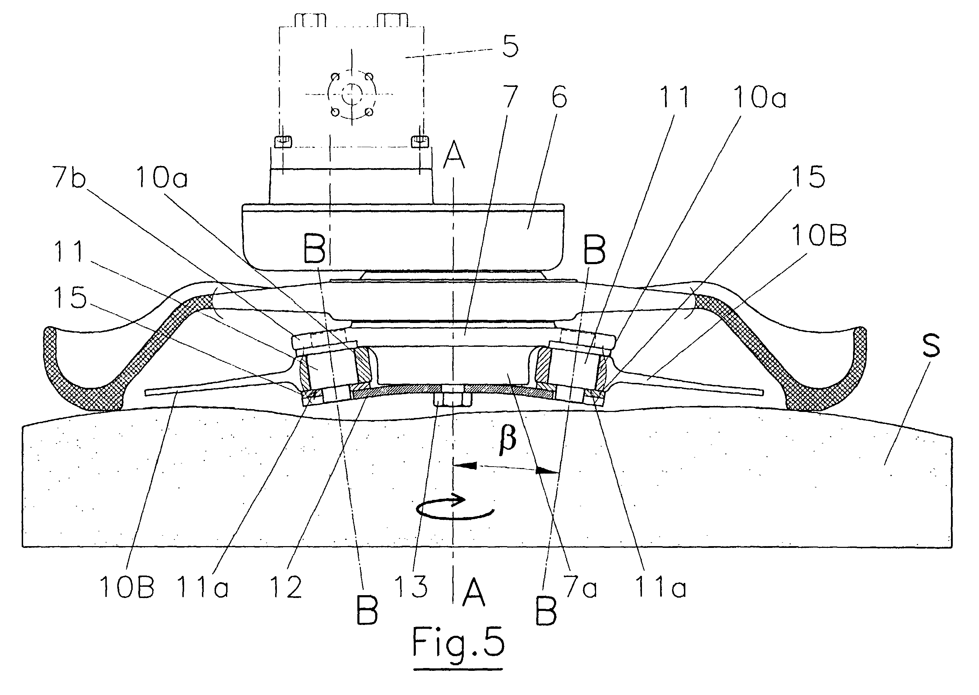

La tête de travail 1 (figures 4 et 5) comprend un motoréducteur de préférence constitué par un moteur hydraulique 5 et par un réducteur 6 entraînant un rotor 7 par l'intermédiaire d'un arbre 8 monté tournant dans un carter 9.

De manière avantageuse, le réducteur 6 est un réducteur à engrenage permettant de décaler, vers l'intérieur, le moteur hydraulique 5 par rapport au centre de la tête de travail 1, en éloignant ainsi ce dernier des ceps entre lesquels il risquerait de taper, en cours de travail.

Sur une zone périphérique du rotor 7, sont fixés, de manière amovible et au moyen d'une articulation cylindrique, au moins deux outils.

Lorsque la machine est utilisée comme machine à sarcler ou machine analogue (figure 4) destinée à extirper les herbes et végétaux nuisibles et/ou à ameublir la surface du sol, les outils sont constitués par des masselottes comportant un bord d'attaque quelque peu tranchant. De manière très avantageuse, ces outils de sarclage 10A sont d'un type particulier décrit dans une autre Demande de Brevet de la Demanderesse.

D'autre part, lorsque la machine est utilisée comme faucheuse ou tondeuse, les outils sont constitués par des lames ou couteaux 10B (figure 5).

Le rotor 7, les outils 10A ou 10B et le système de fixation amovible de ces derniers sont conformés et agencés pour permettre le montage sur ledit rotor, avec une liberté de pivotement d'amplitude limitée, d'au moins deux outils 10A ou 10B. De manière avantageuse, les outils 10A ou 10B sont montés dans des conditions telles que lorsque ceux-ci sont installés sur le rotor, leurs axes de pivotement B-B convergent vers le bas en direction de l'axe A-A de ce dernier, en formant un angle β avec ledit axe de rotation A-A, par exemple un angle de l'ordre de 9°.

Le système de fixation amovible des outils 10A ou 10B, comprend, pour chacun de ceux-ci, un axe d'articulation 11 autour duquel est montée, avec une aptitude de pivotement, la bague d'articulation 10a de l'outil. L'une des extrémités de cet axe d'articulation est logée dans un perçage ménagé au voisinage de la périphérie du rotor 7, tandis que son extrémité opposée est engagée dans une ouverture que présente une bride de fixation 12. Une rondelle de pression 15 peut être disposée autour de l'extrémité inférieure de l'axe d'articulation 11, entre un épaulement circulaire 11 a de ce dernier, et la bride de fixation 12, de façon à permettre le pivotement de l'outil.

Les trous ménagés dans le rotor 7 pour le montage des outils interchangeables 10A ou 10B ont un axe B-B incliné par rapport à l'axe de rotation A-A dudit rotor, de sorte que les axes d'articulation 11 et les axes des bagues de montage 10a sont également inclinés selon l'axe B-B.

La bride 12 est fixée axialement à la base du rotor 7 au moyen d'une unique vis 13 traversant un orifice central de ladite bride et se vissant dans un taraudage ménagé dans la portion inférieure de l'arbre 8.

De la sorte, pour remplacer les outils 10A ou 10B, par exemple en cas d'usure de ces derniers, il suffit de dévisser la vis 13, d'enlever la bride 12 et les rondelles 15, de détacher l'outil à remplacer avec son axe d'articulation 11. Pour fixer les nouveaux outils, on procède de manière inverse.

La tête de travail de la machine à cultiver le sol selon l'invention peut être équipée d'au moins deux outils 10A ou 10B, mais son rotor 7 peut être conformé pour recevoir trois outils ou plus, angulairement et régulièrement espacés.

Lorsque la tête de travail est équipée de deux outils 10A ou 10B, ces derniers sont fixés en des emplacements diamétralement opposés du rotor 7 (figures 4 et 5). Dans ce cas, et comme illustré aux figures 4 et 5, les surfaces d'appui de la bride 12 constituées par les faces inférieures des rondelles 15 et la portion centrale du rotor 7, sont placées sur un arc de cercle, alors que ladite bride est sensiblement plane et dotée d'une capacité de déformation élastique. Lorsque la vis 13 est vissée à fond, on provoque une déformation concave de la bride 12 dont les extrémités s'appliquent alors fortement, par effet ressort, sur les rondelles 15 de maintien des axes d'articulation 11.

Lorsque le rotor tourne à des vitesses comprises entre 200 et 3000 tr/mn, les outils 10A ou 10B ont tendance à s'éloigner de son axe de rotation A-A sous l'effet de la force centrifuge, et leur partie travaillante occupe leur position la plus basse. Lorsqu'un couteau rencontre un obstacle (grosse pierre), il pivote et s'efface en remontant vers l'arrière, en raison de l'inclinaison de son axe de pivotement B-B.

Cette disposition permet de réduire la violence des chocs éventuels et d'éviter la mise hors d'usage prématurée des couteaux.

Le rotor 7 comporte une partie inférieure cylindrique 7a de diamètre plus réduit que celui de sa partie supérieure 7b sous laquelle sont fixés les outils 10A ou 10B. Cette partie inférieure cylindrique 7a sert de butée limitant le mouvement d'escamotage des outils vers l'arrière, lorsque ceux-ci rencontrent un obstacle dur.

Selon une autre importante disposition caractéristique de l'invention, un guide tournant 14 est disposé au-dessus des outils 10A ou 10B, de préférence coaxialement à l'axe de rotation A-A de ces derniers. Ce guide est, par exemple, monté autour de la portion cylindrique inférieure 9a du carter 9, par l'intermédiaire d'un roulement 37, de sorte qu'il peut tourner autour de l'axe de rotation A-A du rotor 7.

Ce guide tournant présente, vue dans la direction de l'axe A-A, la forme générale d'un disque échancré comportant, alternativement, à sa périphérie, des échancrures 16 et des parties saillantes 17.

La tête de travail 1 ainsi réalisée est agencée de sorte que la longueur du rayon d'action maximum R1 des outils rotatifs 10A ou 10B soit inférieure ou égale à la longueur du rayon R2 d'un cercle tangent au fond des échancrures 16 dudit guide.

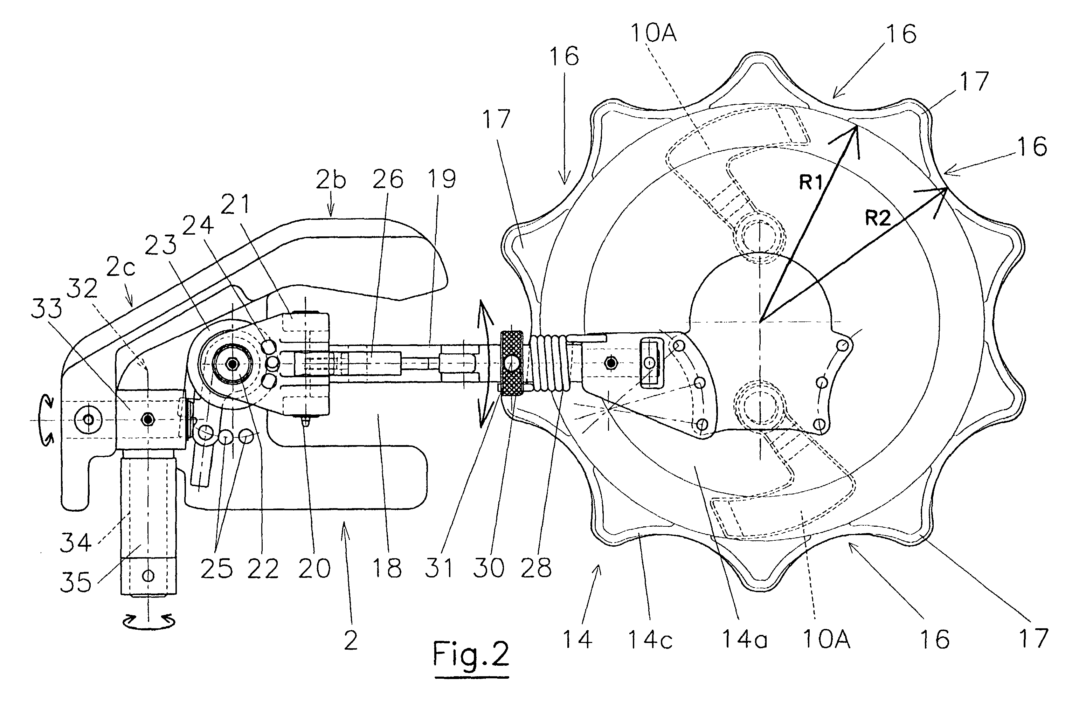

Lorsque le guide engrenant 14 est, selon un mode de réalisation préféré, monté coaxialement à l'axe de rotation A-A des outils 10A ou 10B, ledit guide est dimensionné de sorte que la longueur du rayon d'action maximum R1 des outils rotatifs 10A ou 10B, soit inférieure ou égale à la longueur du rayon R2 d'un cercle tangent au fond des échancrures 16 dudit guide (figure 2).

De manière préférée, le guide échancré 14 est monté à rotation libre.

Il pourrait aussi cependant être accouplé à une motorisation assurant son entraînement en rotation à une vitesse sensiblement égale à la vitesse linéaire d'avancement du tracteur ou autre véhicule équipé de la machine de culture, ce rapport de vitesses étant, par exemple, obtenu au moyen d'un variateur hydraulique connu en soi.

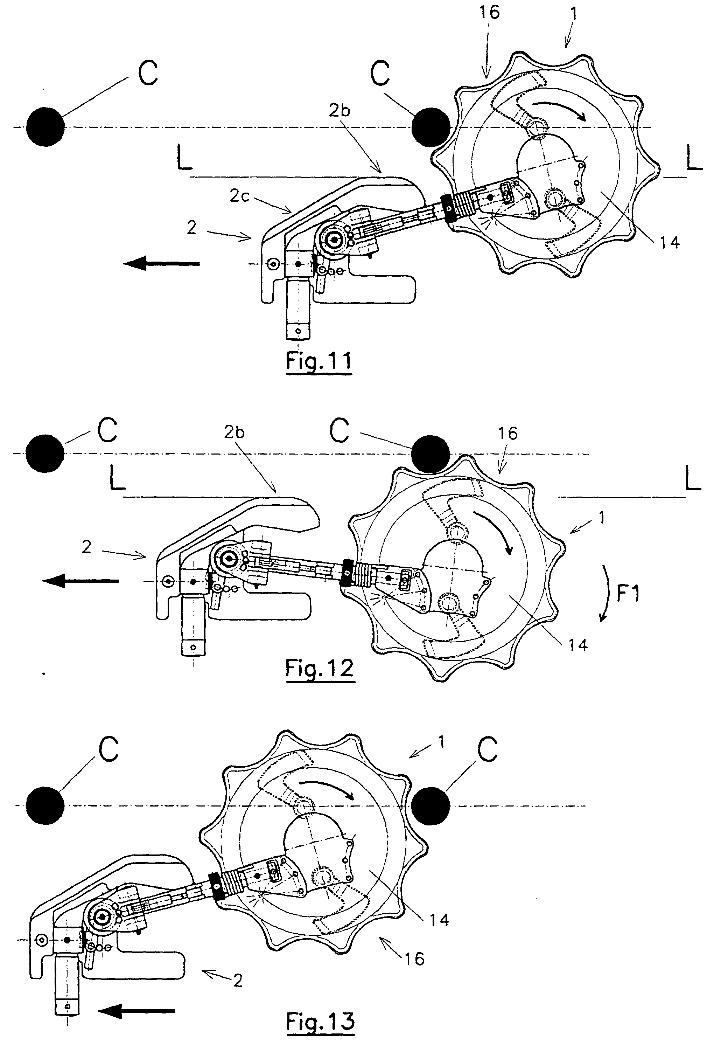

Les figures 11 à 13 illustrent le mode d'action du guide tournant échancré 14 selon l'invention.

Lors de la rencontre d'un cep ou pied de vigne C (ou autre obstacle vertical tel que tronc d'arbre fruitier, piquet de palissage), le guide 14 vient en prise avec ledit cep, par l'intermédiaire de l'une de ses échancrures 16 (figure 11). La machine poursuivant sa progression parallèlement à l'alignement de ceps, le guide 14 roule autour du cep avec lequel il se trouve en prise, en s'écartant de sa trajectoire normale (figure 12). Il effectue ainsi un trajet autour du cep C correspondant à environ la demi-circonférence de ce dernier, trajet durant lequel le cep reste constamment dans le fond de l'échancrure 16, de sorte que les outils de sarclage 10A ou les lames de faucheuse 10B travaillent continuellement très près dudit cep, mais sans pouvoir toucher et blesser ce dernier.

On comprend que le cep fixe et le guide tournant échancré se comportent comme les éléments d'un engrenage dans lequel le cep serait une dent fixe et le guide une roue dentée rotative ; pour cette raison le guide sera qualifié d"'engrenant" dans la suite de la description et dans les revendications.

A la fin de sa rotation autour du cep C (figure 13), le guide engrenant se sépare de ce dernier et reprend sa position normale initiale.

Suivant une autre importante disposition caractéristique de l'invention, le guide engrenant 14 présente, dans sa partie centrale 14a approximativement délimitée par le fond des échancrure 16, la forme générale d'une cloche. La base de cette cloche est comprise dans un premier plan P-P délimitant un espace fermé E dans lequel est entièrement logé le rotor 7 dont la base se trouve au-dessus dudit plan P-P, de sorte que sa partie inférieure ne traîne pas sur le terrain lorsque la machine travaille.

Lorsque la machine est utilisée comme faucheuse (figure 5), les lames ou couteaux 10B sont également logés dans l'espace E délimité par la base de la cloche 14a et se trouvent au-dessus du plan P-P, de sorte qu'ils ne raclent pas le sol.

Lorsque la machine est utilisée comme machine à sarcler (figure 4), la base de la cloche se trouve disposée au-dessus et à distance d'un deuxième plan P'-P' au-dessous duquel se trouvent les outils de sarclage 10A.

De manière avantageuse, les dents ou parties saillantes périphériques 17 du guide engrenant 14 sont relevées par rapport à la base de sa partie centrale, de sorte que ledit guide a la forme d'une cloche dotée d'une bordure crénelée. Les parties saillantes relevées présentent une surface externe courbe 17a dans la direction verticale, cette disposition favorisant le glissement du guide-cloche sur le terrain. Le guide engrenant ainsi conformé peut gravir aisément les dévers, tandis que sa capacité à glisser facilement, permet d'obtenir son retour en position normale avec des ressorts plus faibles, comme on l'explique ci-après.

De préférence, le guide 14 comporte un rebord périphérique 14c orienté vers le haut.

Le guide engrenant en forme de cloche 14, peut être avantageusement réalisé dans un matériau doté d'une capacité de déformation élastique, tel que, par exemple, en polyuréthanne anti-abrasion.

Comme indiqué précédemment, le guide engrenant est, de préférence, monté à rotation libre. Cependant, la rotation des outils de sarclage 10A à une vitesse de l'ordre de 200 à 1500 tours/minute, entraîne un remuement de la terre qui joue le rôle d'un embrayage à friction faisant tourner la cloche, comme si celle-ci était motrice, les outils et la cloche tournant alors dans le même sens.

Selon une autre très importante disposition caractéristique de l'invention, la tête de travail 1 est attelée à un patin pesant 2 conformé pour pouvoir glisser facilement sur le sol S, au moyen d'un dispositif d'accouplement autorisant des mouvements de pivotement de ladite tête de travail autour d'au moins deux axes orthogonaux.

Ce patin de positionnement est constitué par une lourde pièce de métal ayant, vue de dessus, une forme approximativement trapézoïdale. Il comporte une semelle plane et sa face avant présente, dans sa partie inférieure, une surface courbe 2a favorisant son glissement sur le sol en lui évitant de creuser un sillon dans ce dernier. A titre d'exemple, ce patin peut avoir un poids de l'ordre de 50 kg.

D'autre part, sa face latérale externe comprend à l'avant, une partie pentée 2c par rapport à son axe longitudinal et se raccordant à une partie postérieure sensiblement plane 2b parallèle audit axe.

Dans sa partie postérieure, le patin comporte une large ouverture 18 débouchant à l'arrière. Cette ouverture évite qu'il puisse se former un bourrage entre le patin 2 et le guide enveloppant 14 de la tête de travail.

Le patin de positionnement 2 est relié à la tête de travail par l'intermédiaire d'un bras d'accouplement 19.

L'extrémité antérieure de ce bras est fixée au patin 2 au moyen d'un dispositif de liaison de type joint de cardan. Plus précisément, le bras 19 est fixé au moyen d'une articulation cylindrique à axe horizontal 20 dans une chape 21a que présente un support de bras 21. Cette chape est montée avec une aptitude de pivotement sur un axe vertical 22 rigidement solidaire du patin 2 et s'élevant à partir de la zone centrale de celui-ci. On comprend que le bras peut ainsi pivoter autour de deux axes perpendiculaires, de sorte que la tête de travail fixée à l'extrémité postérieure de ce bras peut basculer dans la direction verticale autour de l'axe horizontal 20 et pivoter latéralement à droite ou à gauche autour de l'axe vertical 22.

En position normale correspondant à la position de travail de la machine entre les ceps C, le guide circulaire 14 se trouve placé, au moins en partie et, de préférence au moins pour moitié, à l'extérieur d'une ligne L-L passant par le bord externe 2b du patin 2 (figure 11). Comme indiqué précédemment, lors de la rencontre d'un cep C, le patin 2, par l'intermédiaire de sa face pentée 2c, pré-positionne la tête de travail 1 et le guide 14 vient en prise avec ledit cep, autour duquel il roule en se déplaçant (selon flèche F1 de la figure 12) vers l'intérieur, en direction du centre de l'inter-rangs.

Des moyens maintiennent la tête de travail 1 dans cette position, et permettent le déplacement latéral de ladite tête en direction de l'inter-rangs et assurent son retour en position normale, après passage du cep.

Ces moyens sont, par exemple, constitués par un ressort hélicoïdal 23 disposé autour du manchon cylindrique 21b de montage du support de bras 21 et fixé, par l'intermédiaire de ses extrémités, d'une part, dans un trou 24 que présente celui-ci et, d'autre part, dans un trou 25 que présente un organe rigidement solidaire de l'axe 22 ou du patin 2. Le support de bras 21 et/ou le patin (ou l'organe de fixation rigidement solidaire dudit patin) peut ou peuvent comporter plusieurs trous situés sur un arc de cercle (figure 2) pour permettre de modifier l'emplacement du point d'ancrage de l'une au moins des extrémités du ressort 23. Il est ainsi possible de régler le couple de rappel ou raideur de ce dernier.

D'autre part, un amortisseur, de préférence constitué par un amortisseur hydraulique réglable 26, relie le support de bras 21 ou carter du dispositif à cardan et le bras d'accouplement 19. Cet amortisseur 26 permet de stabiliser la tête de sarclage ou de fauchage en cours de travail, en évitant que cette dernière ne progresse par rebonds successifs, notamment sur les terrains caillouteux ; il permet donc un meilleur travail dans de bonnes conditions de sécurité.

La tête de travail 1 est montée avec une latitude de basculement autour d'un axe parallèle à l'axe longitudinal du patin 2 ou axe d'avancement de l'équipage : patin 2 - tête de travail 1.

L'extrémité postérieure du bras d'accouplement 19 est reliée à la tête de travail 1, par l'intermédiaire d'une articulation cylindrique 27, de sorte que ladite tête de travail peut basculer autour de ladite extrémité.

Un système de butée, de préférence réglable, limite l'amplitude de ce basculement, de sorte à empêcher que la tête de travail ne puisse basculer avec une ampleur trop importante créant un risque de retournement de ladite tête.

Ce système de butée est, par exemple, constitué par un ressort hélicoïdal 28 disposé autour du bras d'accouplement 19 et fixé, d'une part, à un manchon 29 ou autre pièce rigidement solidaire du carter 9 de la tête de travail et, d'autre part, à une bague 30 montée autour dudit bras et rendue solidaire de ce dernier par exemple au moyen d'une vis de pression 31, ou autre organe d'assemblage démontable permettant de modifier la position angulaire de ladite bague. Celle-ci permet de régler la raideur du ressort 28.

Outre sa fonction d'anti-basculement, l'agencement susmentionné permet d'amortir les mouvements de basculement de la tête de sarclage, ou de fauchage, en cours de travail et de plaquer la base du guide-cloche contre le sol, notamment lorsqu'il se trouve dans les zones de contact avec les ceps.

Le patin tracteur 2 est relié à l'extrémité distale du bras 3 du bâti d'attelage relevable 4, au moyen d'un dispositif d'accouplement autorisant des mouvements de pivotement dudit patin autour de deux axes orthogonaux horizontaux ou approximativement horizontaux. Ce dispositif est du genre joint de cardan et comprend :
- un axe 32 fixé rigidement sur le patin 2 et orienté parallèlement à l'axe longitudinal de celui-ci ;
- une pièce en forme de T constituée d'une douille 33 et d'un axe 34 orienté transversalement et rigidement solidaire de celle-ci ; cette douille étant montée à rotation libre autour de l'axe 32 ;
- une douille 35 fixée à l'extrémité distale du bras 3 et dans laquelle est monté l'axe 34, avec une latitude de rotation.

On conçoit qu'en raison de son aptitude à basculer autour de deux axes perpendiculaires horizontaux, le patin se déplace en épousant étroitement la surface du terrain quelles que soient les inégalités rencontrées lors de sa progression (pentes ou dévers). L'axe transversal 34 permet de suivre la conformation du terrain dans le sens de l'avancement, tandis que l'axe longitudinal 32 permet de s'affranchir des problèmes de dévers. De la sorte, la tête de sarclage ou de fauchage 1 attelée audit patin, se comporte pareillement et le guide enveloppant 14 reste plaqué contre le sol quelle que soit la configuration de celui-ci.

Un dispositif d'équilibrage, de préférence réglable, par exemple constitué par un ressort hélicoïdal 36 agissant en traction, est fixé, par l'intermédiaire de ses extrémités opposées, d'une part, à un point proche de l'extrémité distale du bras 3 et, d'autre part, à la partie avant du patin ; ce ressort d'équilibrage permet d'éviter que le patin ne se plante dans le sol, en limitant l'amplitude de son basculement vers l'avant.

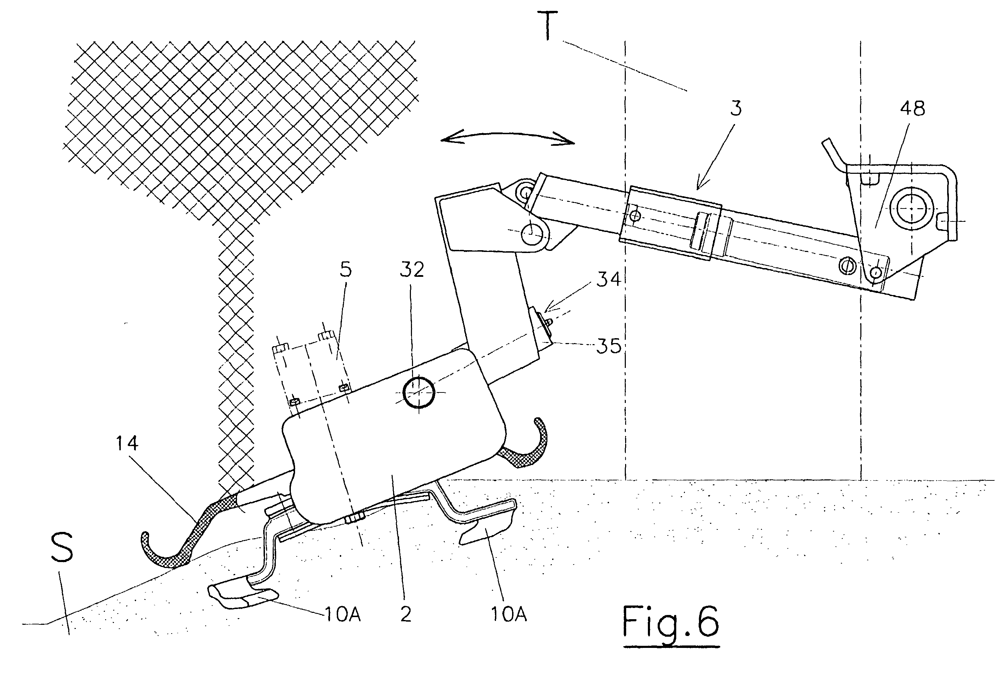

La figure 6 montre, à titre d'exemple, une position de basculement du patin 2 autour de l'axe 32 correspondant au glissement dudit patin sur un terrain en dévers.

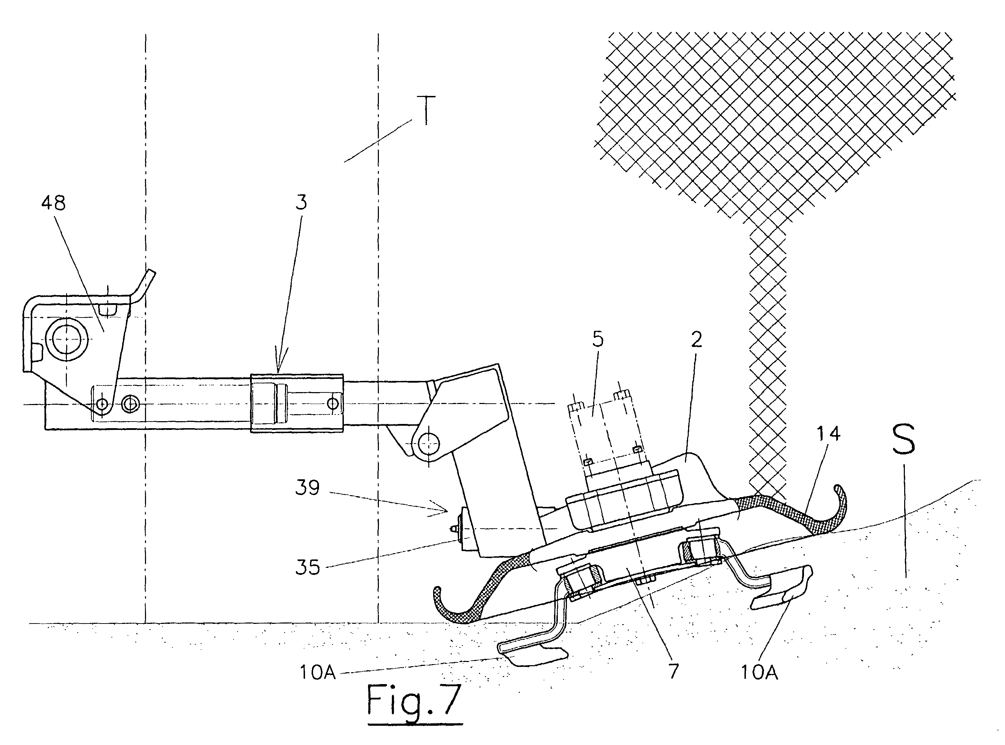

La figure 7 illustre l'action d'une tête de sarclage se déplaçant sur un terrain en dévers ; on voit que grâce au guide en forme de cloche, les outils se trouvent idéalement positionnés dans le sol S, pour remplir efficacement leur fonction.

Comme indiqué précédemment, lors de la rencontre d'un cep C ou autre obstacle vertical, le patin 2 peut être amené à glisser, par l'intermédiaire de sa surface pentée 2c, sur ledit obstacle, de sorte que ledit patin se trouve repoussé latéralement en direction du centre de l'inter-rangs de vigne dans lequel évolue la tête de travail.

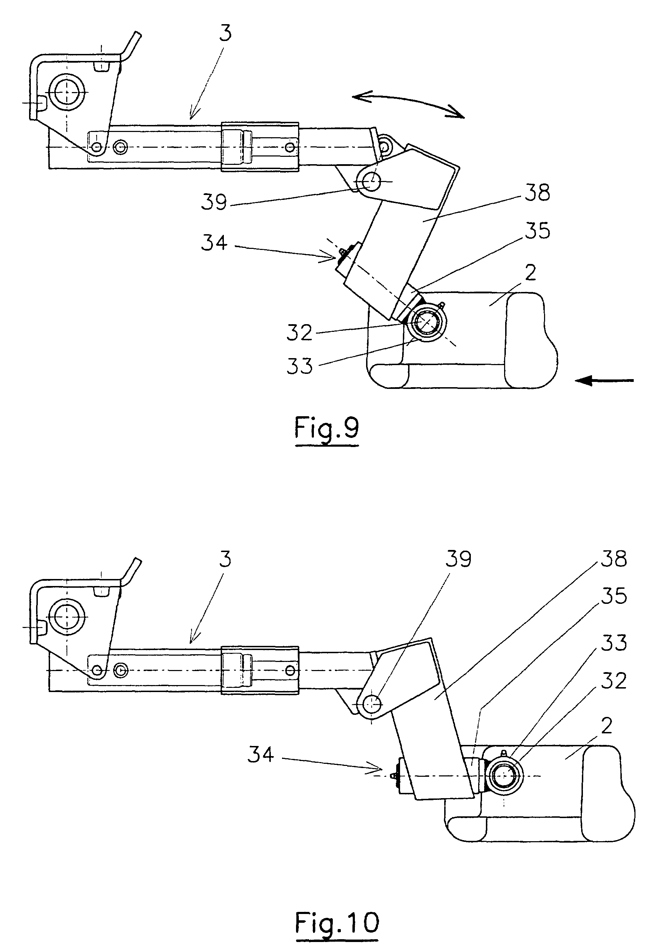

L'extrémité distale du bras 3 est agencée de façon à permettre ce mouvement et à assurer le rappel du patin dans sa position normale. Cette situation est illustrée aux figures 9 et 10.

La douille 35 dans laquelle est logée l'axe 34, est rigidement solidaire de l'extrémité inférieure d'une pièce basculante 38 dont la partie supérieure est fixée, au moyen d'une articulation 39, sur l'extrémité distale du bras 3. Sur l'extrémité de cette pièce, est fixée, au moyen d'une articulation 40, l'une des extrémités d'une tige 41 autour de laquelle est disposé un ressort 42 agissant en extension. Ce ressort 42 est calé, par l'intermédiaire de ses extrémités opposées, d'une part, contre une rondelle 43 maintenue par un écrou 44 se vissant sur l'extrémité libre de la tige 41, et, d'autre part, contre une butée 45 montée pivotante, par l'intermédiaire d'axes 46, dans une chape 47 rigidement solidaire du bas 3.

La figure 9 illustre une position d'effacement du patin 2, en direction du centre de l'inter-rangs, suivant laquelle le ressort 42 du dispositif précédemment décrit se trouve comprimé, tandis que dans la situation de retour en position normale montrée à la figure 10, ledit ressort se trouve détendu.

Le bâti d'attelage relevable supportant le bras 3 est monté, de façon démontable, sur une ferrure d'adaptation 48 fixée sur le châssis du véhicule porteur, sur le côté, ou à l'avant, ou à l'arrière, à droite ou à gauche de ce dernier.

## Revendications

1. Machine polyvalente de culture interpieds pour plantations d'arbres ou arbustes, telles que vignes ou vergers comprenant une tête de travail (1) comportant un rotor (7) entraîné par un moteur (5-6) et agencé pour recevoir au moins deux outils interchangeables (10A ou 10 B), ladite tête de travail comprenant encore un guide engrenant (14) apte à tourner autour de son axe de rotation et ayant, vu dans la direction de cet axe, la forme générale d'un disque échancré présentant, alternativement, à sa périphérie, des échancrures (16) et des parties saillantes (17), de sorte que ledit guide peut ainsi, en cours de travail, engrener successivement avec les pieds des arbres ou arbustes, lors de la rencontre de ces derniers, **caractérisée en ce que** ledit guide engrenant (14) est disposé au-dessus des outils (10A ou 10B)et **en ce qu'**il présente dans sa partie centrale la forme générale d'une cloche (14a) . la longueur du rayon d'action (R1) desdits outils rotatifs (10A ou 10B) étant inférieure ou égale à celle du rayon (R2) d'un cercle tangent au fond desdites échancrures (16) du guide engrenant (14).

2. Machine de culture interpieds suivant la revendication 1, **caractérisée en ce que** le guide engrenant (14) est monté coaxialement à l'axe de rotation (A-A) du rotor (7).

3. Machine polyvalente de culture interpieds selon l'une des revendications 1 ou 2, **caractérisée en ce que** le rotor (7) sur lequel sont fixés les outils de sarclage (10A ou 10B) est entièrement logé dans l'espace clos délimité par la base de la cloche (14a).

4. Machine polyvalente de culture interpieds selon l'une quelconque des revendications 1 à 3, **caractérisée en ce que** les outils (10B) sont entièrement contenus dans l'espace délimité par la base de la cloche (14a).

5. Machine polyvalente de culture interpieds suivant l'une quelconque des revendications 1 à 3, **caractérisée en ce que** la base de la cloche (14a) est comprise dans un premier plan (P-P) se trouvant au-dessus et à distance d'un deuxième plan (P'-P') au-dessous duquel est disposée la partie travaillante des outils (10A).

6. Machine polyvalente de culture interpieds, selon l'une quelconque des revendications 1 à 5, **caractérisée en ce que** les parties saillantes périphériques (17) du guide engrenant (14-14a) sont relevées par rapport à la base de sa partie centrale en forme de cloche (14a).

7. Machine polyvalente de culture interpieds, suivant l'une quelconque des revendications 1 à 6, **caractérisée en ce que** la guide engrenant (14-14a) est monté à rotation libre.

8. Machine polyvalente de culture interpieds, suivant l'une quelconque des revendications 1 à 6, **caractérisée en ce que** le guide engrenant (14-14a) est accouplé à une motorisation assurant son entraînement en rotation à une vitesse sensiblement égale à la vitesse linéaire d'avancement du tracteur ou autre véhicule équipé de ladite machine de culture.

9. Machine polyvalente de culture interpieds suivant l'une quelconque des revendications 1 à 8, **caractérisée en ce que** le guide engrenant (14-14a) est réalisé dans un matériau doté d'une capacité de déformation élastique.

10. Machine polyvalente de culture interpieds selon l'une quelconque des revendications 1 à 9, **caractérisée en ce que** les parties saillantes périphériques (17) du guide engrenant (14) présentent, la forme générale d'un triangle à sommet arrondi.

11. Machine polyvalente de culture interpieds, selon l'une quelconque des revendications 1 à 10, **caractérisée en ce que** la tête de travail (1) est attelée à un patin pesant (2) apte à glisser sur le sol, au moyen d'un dispositif d'accouplement (19-20-21-22) autorisant des mouvements de pivotement de ladite tête de travail autour de deux axes orthogonaux ou approximativement orthogonaux.

12. Machine polyvalente de culture interpieds, selon la revendication 11, **caractérisée en ce qu'**elle comporte des moyens (23) de maintien de la tête de travail (1) dans une position suivant laquelle son guide engrenant (14-14a) se trouve placé, au moins en partie, à l'extérieur d'une ligne (L-L) passant par le bord externe (2b) du patin (2), ces moyens permettant le déplacement de la tête de travail (1) en direction du centre de l'inter-rangs, lors de la rencontre d'un obstacle vertical (C) tel que pied de vigne, tronc d'arbre, piquets de palissage, et assurant le rappel en position de ladite tête de travail après passage dudit obstacle vertical.

13. Machine polyvalente de culture interpieds selon l'une des revendications 11 ou 12, **caractérisée en ce que** le dispositif d'accouplement de la tête de travail (1) et du patin (2) comprend un bras d'accouplement (19) relié au moyen d'une articulation à axe horizontal (20) à un support de bras (21) lui-même fixé, avec une aptitude de pivotement, sur un axe vertical (22) rigidement solidaire du patin (2), un ressort (23) fixé, par l'intermédiaire de ses extrémités opposées, au support de bras (21) et au patin (2) ou à un organe solidaire de celui-ci, tendant à maintenir ou à rappeler ladite tête de travail (1) dans la position suivant laquelle son guide engrenant (14-14a) se trouve placé, au moins en partie, à l'extérieur d'une ligne (L-L) passant par le bord externe (2b) du patin (2).

14. Machine polyvalente de culture interpieds suivant l'une quelconque des revendications 11 à 13, **caractérisée en ce qu'**un amortisseur (26) relie le support de bras d'accouplement (21) et le bras d'accouplement (19).

15. Machine polyvalente de culture interpieds selon l'une quelconque des revendications 11 à 14, **caractérisée en ce que** la tête de travail (1) est montée avec une aptitude de basculement autour de l'axe de l'extrémité du bras d'accouplement (19) sur laquelle elle est installée.

16. Machine polyvalente de culture interpieds suivant la revendication 15, **caractérisée en ce que** la tête de travail (1) est reliée à l'extrémité postérieure du bras d'accouplement par l'intermédiaire d'une articulation cylindrique (27).

17. Machine polyvalente de culture interpieds, selon l'une des revendications 15 ou 16, **caractérisée en ce qu'**elle comporte un système de butée (28, 29, 30, 31) de préférence réglable, limitant l'amplitude du basculement de la tête de travail (1).

18. Machine polyvalente de culture interpieds, suivant la revendication 17, **caractérisée en ce que** ledit système de butée comprend un ressort hélicoïdal (28) disposé autour du bras d'accouplement (19) et fixé, d'une part, à une pièce (29) rigidement solidaire du carter (9) de la tête de travail (1) et, d'autre part, à une bague (30) montée autour dudit bras et rendue solidaire de ce dernier au moyen d'une vis de pression (31).

19. Machine polyvalente de culture interpieds suivant l'une quelconque des revendications 11 à 18, **caractérisée en ce que** le patin tracteur (2) est relié à l'extrémité distale du bras (3) du bâti d'attelage relevable (4), au moyen d'un dispositif d'accouplement (32, 33, 34, 35) autorisant des mouvements de pivotement dudit patin autour de deux axes orthogonaux horizontaux ou approximativement horizontaux.

20. Machine polyvalente de culture interpieds, selon la revendication 19, **caractérisée en ce qu'**un dispositif d'équilibrage (36), de préférence réglable, est fixé, par l'intermédiaire de ses extrémités opposées, d'une part, à un point proche de l'extrémité distale du bras (3) du bâti d'attelage relevable (4) et, d'autre part, à la partie avant du patin (2).

21. Machine polyvalente de culture interpieds, selon l'une quelconque des revendications 11 à 20, **caractérisée en ce qu'**elle comporte des moyens (40-41-42-43-44-45-46-47) permettant l'effacement latéral du patin (2) lors de la rencontre d'un obstacle dur (C) et assurant son retour en positon normale après passage dudit obstacle.

## Patentansprüche

1. Mehrzweckmaschine zur Zwischenkultivierung für Baum- oder Strauchpflanzungen, wie beispielsweise Wein- oder Obstgärten, umfassend einen Arbeitskopf (1), der einen von einem Motor (5-6) angetriebenen Rotor (7) aufweist und so angeordnet ist, daß er wenigstens zwei auswechselbare Werkzeuge (10A oder 10B) aufnehmen kann, wobei der Arbeitskopf ferner eine eingreifende Führungseinrichtung (14) umfaßt, die sich um ihre Drehachse drehen kann und, in Richtung dieser Achse gesehen, die allgemeine Form einer ausgeschnittenen Scheibe besitzt, wobei sie alternativ an ihrem Umfang Einschnitte (16) und vorstehende Teile (17) aufweist, so daß die Führungseinrichtung daher bei der Arbeit nacheinander in die Wurzelenden der Bäume oder Sträucher beim Auftreffen auf diese letzteren eingreifen kann, **dadurch gekennzeichnet, daß** diese eingreifende Führungseinrichtung (14) über den Werkzeugen (10A oder 10B) angeordnet ist, und dadurch, daß sie in ihrem Mittelteil die allgemeine Form einer Glocke (14a) aufweist, wobei die Länge des Aktionsradius (R1) der sich drehenden Werkzeuge (10A oder 10B) kleiner oder gleich der Länge des Radius (R2) eines am Boden der Einschnitte (16) der eingreifenden Führungseinrichtung (14) anliegenden Kreises ist.

2. Maschine zur Zwischenkultivierung nach Anspruch 1, **dadurch gekennzeichnet, daß** die eingreifende Führungseinrichtung (14) koaxial zur Drehachse (A-A) des Rotors (7) befestigt ist.

3. Mehrzweckmaschine zum Zwischenkultivierung nach einem der Ansprüche 1 oder 2, **dadurch gekennzeichnet, daß** der Rotor (7), an dem die Jätwerkzeuge (10A oder 10B) befestigt sind, vollständig in dem geschlossen Raum gelagert ist, der von der Basis der Glocke (14a) begrenzt wird.

4. Mehrzweckmaschine zur Zwischenkultivierung nach einem der Ansprüche 1 bis 3, **dadurch gekennzeichnet, daß** die Werkzeuge (10B) vollständig in dem Raum enthalten sind, der von der Basis der Glocke 14a) begrenzt wird.

5. Mehrzweckmaschine zur Zwischenkultivierung nach einem der Ansprüche 1 bis 3, **dadurch gekennzeichnet, daß** die Basis der Glocke (14a) in einer ersten Ebene (P-P) liegt, die sich über und beabstandet von einer zweiten Ebene P'-P') befindet, unter welcher der arbeitende Teil der Werkzeuge (10A) angeordnet ist.

6. Mehrzweckmaschine zur Zwischenkultivierung nach einem der Ansprüche 1 bis 5, **dadurch gekennzeichnet, daß** die peripheren vorstehenden Teile (17) der eingreifenden Führungseinrichtung (14 - 14a) in bezug auf die Basis ihres mittleren Teils in Glockenform (14a) erhaben sind.

7. Mehrzweckmaschine zur Zwischenkultivierung nach einem der Ansprüche 1 bis 6, **dadurch gekennzeichnet, daß** die eingreifende Führungseinrichtung (14 - 14a) frei drehbar befestigt ist.

8. Mehrzweckmaschine zur Zwischenkultivierung nach einem der Ansprüche 1 bis 6, **dadurch gekennzeichnet, daß** die eingreifende Führungseinrichtung (14 - 14a) mit einer Motorisierung gekoppelt ist, die ihren Drehantrieb mit einer Geschwindigkeit sicherstellt, die im wesentlichen gleich der linearen Vorwärtsbewegung der Zugmaschine oder eines anderen Fahrzeugs ist, das mit der Maschine zum Kultivierung ausgerüstet ist.

9. Mehrzweckmaschine zur Zwischenkultivierung nach einem der Ansprüche 1 bis 8, **dadurch gekennzeichnet, daß** die eingreifende Führungseinrichtung (14 - 14a) aus einem Material ausgeführt ist, das eine elastische Verformbarkeitseigenschaft aufweist.

10. Mehrzweckmaschine zur Zwischenkultivierung nach einem der Ansprüche 1 bis 9, **dadurch gekennzeichnet, daß** die peripheren vorstehenden Teile (17) der eingreifenden Führungseinrichtung (14) die allgemeine Form eines Dreiecks mit abgerundeter Spitze aufweisen.

11. Mehrzweckmaschine zur Zwischenkultivierung nach einem der Ansprüche 1 bis 10, **dadurch gekennzeichnet, daß** der Arbeitskopf (1) an eine schwere Kufe (2), die auf dem Boden gleiten kann, mittels einer Kopplungseinrichtung (19-20-21-22) angekoppelt ist, die Schwenkbewegungen des Arbeitskopfs um zwei orthogonale oder annähernd orthogonale Achsen zuläßt.

12. Mehrzweckmaschine zur Zwischenkultivierung nach Anspruch 11, **dadurch gekennzeichnet, daß** sie Mittel (23) zum Festhalten des Arbeitskopfs (1) in einer Position umfaßt, in der ihre eingreifende Führungseinrichtung (14 - 14a) sich wenigstens teilweise außerhalb einer Linie (L-L) befindet, die durch den äußeren Rand (2b) der Kufe (2) führt, wobei diese Mittel bei einem Auftreffen auf ein vertikales Hindernis (C), wie beispielsweise einen Weinstock, einen Baumstamm, Spalierpfähle, das Bewegen des Arbeitskopfs (1) in Richtung der Mitte der Zwischenreihen gestatten und das Zurückholen des Arbeitskopfs in die Position nach dem Passieren des vertikalen Hindernisses sicherstellen.

13. Mehrzweckmaschine zur Zwischenkultivierung nach einem der Ansprüche 11 oder 12, **dadurch gekennzeichnet, daß** die Kopplungseinrichtung des Arbeitskopfs (1) und der Kufe (2) einen Kopplungsarm (19) aufweist, der mittels eines Gelenks mit horizontaler Achse (20) mit einer Armstütze (21) verbunden ist, die selbst schwenkbar auf einer vertikalen Achse (22) befestigt ist, die starr einstückig ist mit der Kufe (2), wobei eine Feder (23), die an ihren gegenüberliegenden Enden an der Armstütze (21) und an der Kufe (2) oder einem mit dieser einstückigen Organ befestigt ist, dazu neigt, den Arbeitskopf (1) in der Position zu halten oder in diese zurückzuholen, in der sich seine eingreifende Führungseinrichtung (14 - 14a) wenigstens teilweise außerhalb einer Linie (L-L) befindet, die durch den äußeren Rand (2b) der Kufe (2) führt.

14. Mehrzweckmaschine zur Zwischenkultivierung nach einem der Ansprüche 11 bis 13, **dadurch gekennzeichnet, daß** ein Dämpfungsglied (26) die Kopplungsarmstütze (21) und den Kopplungsarm (19) verbindet.

15. Mehrzweckmaschine zur Zwischenkultivierung nach einem der Ansprüche 11 bis 14, **dadurch gekennzeichnet, daß** der Arbeitskopf (1) kippbar um eine Achse des Endes des Kopplungsarms (19) befestigt ist, auf dem er angebracht ist.

16. Mehrzweckmaschine zur Zwischenkultivierung nach Anspruch 15, **dadurch gekennzeichnet, daß** der Arbeitskopf (1) mit dem rückwärtigen Ende des Kopplungsarms mittels einer zylindrischen Gelenkverbindung (27) verbunden ist.

17. Mehrzweckmaschine zur Zwischenkultivierung nach einem der Ansprüche 11 oder 16, **dadurch gekennzeichnet, daß** sie ein vorzugsweise regulierbares Anschlagsystem (28, 29, 30, 31) umfaßt, das die Kipp-Amplitude des Arbeitskopfs (1) begrenzt.

18. Mehrzweckmaschine zur Zwischenkultivierung nach Anspruch 17, **dadurch gekennzeichnet, daß** das Anschlagsystem eine spiralförmige Feder (28) aufweist, die um den Kopplungsarm (19) angeordnet ist und einesteils an einem Element (29), das starr einstückig mit dem Gehäuse (9) des Arbeitskopfs (1) ist, und anderenteils an einem um den Arm angebrachten Ring (30) befestigt ist und mit diesem mittels einer Preßschraube (31) einstückig gemacht wurde.

19. Mehrzweckmaschine zur Zwischenkultivierung nach einem der Ansprüche 11 bis 18, **dadurch gekennzeichnet, daß** die Zugkufe (2) mit dem distalen Endes des Arms (3) des anhebbaren Kopplungsrahmens (4) mittels einer Kopplungseinrichtung (32, 33, 34, 35) verbunden ist, die Schwenkbewegungen der Kufe um zwei orthogonale horizontale oder annähernd horizontale Achsen zuläßt.

20. Mehrzweckmaschine zur Zwischenkultivierung nach Anspruch 19, **dadurch gekennzeichnet, daß** eine vorzugsweise regulierbare Abgleichvorrichtung (36) an ihren gegenüberliegenden Enden zum einen mit einem Punkt in der Nähe des distalen Endes des Arms (3) des anhebbaren Kopplungsrahmens (4) und zum anderen an dem vorderen Teil der Kufe (2) befestigt ist.

21. Mehrzweckmaschine zur Zwischenkultivierung nach einem der Ansprüche 11 bis 20, **dadurch gekennzeichnet, daß** sie Mittel (40-41-42-43-44-45-46-47) umfaßt, die das seitliche Zurückziehen der Kufe (2) beim Auftreffen auf ein hartes Hindernis (C) gestatten und deren Rückkehr in die normale Position nach dem Passieren des Hindemisses sicherstellen.

## Claims

1. A multi-purpose machine for cultivating between trunks for plantations of trees or shrubs such as vineyards or orchards, comprising a working head (1) including a rotor (7) driven by a motor (5-6) and arranged to accommodate at least two interchangeable tools (10A or 10B), said working head further comprising an engaging guide (14) capable of rotating about its axis of rotation and, seen in the direction of said axis, being in the general shape of a notched disc which has alternately at its periphery notches (16) and projecting parts (17) such that said guide in the course of operation can thus successively engage with the trunks of the trees or shrubs when meeting same, **characterised in that** said engaging guide (14) is disposed above the tools (10A or 10B) and that in its central part it is in the general shape of a bell (14a), the length of the radius of action (R1) of said rotary tools (10A or 10B) being less than or equal to that of the radius (R2) of a circle tangential to the bottom of said notches (16) of the engaging guide (14).

2. A machine for cultivating between trunks according to claim 1 **characterised in that** the engaging guide (14) is mounted in coaxial relationship with the axis of rotation (A-A) of the rotor (7).

3. A multi-purpose machine for cultivating between trunks according to one of claims 1 and 2 **characterised in that** the rotor (7) to which the hoeing tools (10A or 10B) are fixed is entirely accommodated in the closed space delimited by the base of the bell (14a).

4. A multi-purpose machine for cultivating between trunks according to any one of claims 1 to 3 **characterised in that** the tools (10B) are entirely contained in the space delimited by the base of the bell (14a).

5. A multi-purpose machine for cultivating between trunks according to any one of claims 1 to 3 **characterised in that** the base of the bell (14a) is included in a first plane (P-P) which is above and at a spacing from a second plane (P'-P'), below which the working part of the tools (10A) is disposed.

6. A multi-purpose machine for cultivating between trunks according to any one of claims 1 to 5 **characterised in that** the peripheral projecting parts (17) of the engaging guide (14-14a) are raised with respect to the base of its central part in the form of a bell (14a).

7. A multi-purpose machine for cultivating between trunks according to any one of claims 1 to 6 **characterised in that** the engaging guide (14-14a) is mounted freely rotatably.

8. A multi-purpose machine for cultivating between trunks according to any one of claims 1 to 6 **characterised in that** the engaging guide (14-14a) is coupled to a motorisation means for ensuring that it is driven in rotation at a speed substantially equal to the linear speed of advance of the tractor or other vehicle fitted with said cultivating machine.

9. A multi-purpose machine for cultivating between trunks according to any one of claims 1 to 8 **characterised in that** the engaging guide (14-14a) is made of a material having a capacity for elastic deformation.

10. A multi-purpose machine for cultivating between trunks according to any one of claims 1 to 9 **characterised in that** the peripheral projecting parts (17) of the engaging guide (14) are in the general shape of a triangle with a rounded apex.

11. A multi-purpose machine for cultivating between trunks according to any one of claims 1 to 10 **characterised in that** the working head (1) is coupled to a heavy runner (2) capable of sliding on the ground by means of a coupling device (19-20-21-22) permitting pivotal movements of said working head about two orthogonal or approximately orthogonal axes.

12. A multi-purpose machine for cultivating between trunks according to claim 1 **characterised in that** it comprises means (23) for holding the working head (1) in a position in which its engaging guide (14-14a) is placed at least in part to the outside of a line (L-L) passing through the outside edge (2b) of the runner (2), said means permitting displacement of the working head (1) in the direction of the centre of the inter-row spacing when meeting a vertical obstacle (C) such a vine stem, tree trunk, fence posts, and ensuring return to its position of the working head after passing said vertical obstacle.

13. A multi-purpose machine for cultivating between trunks according to one of claims 11 and 12 **characterised in that** the coupling device for the working head (1) and the runner (2) comprises a coupling arm (19) connected by means of a pivot (20) with a horizontal axis to an arm support (21) which is itself fixed, with capability of pivotal movement, to a vertical axis (22) which is rigidly fixed with respect to the runner (2), a spring (23) fixed by way of its opposite ends to the arm support (21) and to the runner (2) or to a member which is fixed with respect thereto, tending to hold said working head (1) in or return it to the position in which its engaging guide (14-14a) is disposed at least in part to the outside of a line (L-L) passing through the outside edge (2b) of the runner (2).

14. A multi-purpose machine for cultivating between trunks according to any one of claims 11 to 13 **characterised in that** a damper (26) connects the coupling arm support (21) and the coupling arm (19).

15. A multi-purpose machine for cultivating between trunks according to any one of claims 11 to 14 **characterised in that** the working head (1) is mounted with a capacity for swinging movement about the axis of the end of the coupling arm (19) on which it is fitted.

16. A multi-purpose machine for cultivating between trunks according to claim 15 **characterised in that** the working head (1) is connected to the rear end of the coupling arm by way of a cylindrical joint (27).

17. A multi-purpose machine for cultivating between trunks according to one of claims 15 and 16 **characterised in that** it comprises an abutment system (28, 29, 30, 31) which is preferably adjustable for limiting the amplitude of the swinging movement of the working head (1).

18. A multi-purpose machine for cultivating between trunks according to claim 17 **characterised in that** said abutment system comprises a coil spring (28) disposed around the coupling arm (19) and fixed on the one hand to a piece (29) which is rigidly fixed with respect to the casing (9) of the working head (1) and on the other hand to a ring (30) mounted around said arm and fixed with respect to the latter by means of a pressing screw (31).

19. A multi-purpose machine for cultivating between trunks according to any one of claims 11 to 18 **characterised in that** the tractor runner (2) is connected to the distal end of the arm (3) of the liftable attachment frame (4) by means of a coupling device (32, 33, 34, 35) permitting pivotal movements of said runner about two orthogonal horizontal or approximately horizontal axes.

20. A multi-purpose machine for cultivating between trunks according to claim 19 **characterised in that** a balancing device (36) which is preferably adjustable is fixed by way of its opposite ends on the one hand to a point near the distal end of the arm (3) of the liftable attachment frame (4) and on the other hand to the front part of the runner (2).

21. A multi-purpose machine for cultivating between trunks according to any one of claims 11 to 20 **characterised in that** it comprises means (40-41-42-43-44-45-46-47) permitting lateral withdrawal of the runner (2) upon meeting a hard obstacle (C) and ensuring return thereof to the normal position after passing said obstacle.
